# EUROPÄISCHE PATENTSCHRIFT

(11) **EP 3 448 805 B1**
(45) Veröffentlichungstag und Bekanntmachung des Hinweises auf die Patenterteilung: **26.01.2022**
(21) Anmeldenummer: 17725506.4
(22) Anmeldetag: 28.04.2017
(51) Int. Cl.: C01B 3/38, C01B 3/50, C01B 3/32

(54) **ANLAGE UND VERFAHREN ZUR GASKOMPRESSIONSFREIEN RÜCKGEWINNUNG UND SPEICHERUNG VON KOHLENSTOFF**
INSTALLATION AND METHOD FOR CARBON RECOVERY AND STORAGE, WITHOUT THE USE OF GAS COMPRESSION
INSTALLATION ET PROCÉDÉ DE RÉCUPÉRATION ET DE STOCKAGE DE CARBONE SANS COMPRESSION DES GAZ

(30) Priorität: 28.04.2016 AT 2212016
(43) Veröffentlichungstag der Anmeldung: 06.03.2019
(73) Patentinhaber: Mair, Christian, 6020 Innsbruck (AT)
(72) Erfinder: Mair, Christian, 6020 Innsbruck (AT)
(86) Internationale Anmeldenummer: PCT/EP2017/000533
(87) Internationale Veröffentlichungsnummer: WO 2017/186352

(56) Entgegenhaltungen:
- EP-A1- 1 858 803
- EP-A1- 2 181 962
- EP-B1- 1 858 803
- JP-A- 2010 235 358
- US-A- 6 090 312
- US-A1- 2005 123 810

## Beschreibung

### Technisches Gebiet:

Die Erfindung betrifft eine Anlage und ein Verfahren zur Rückgewinnung und Speicherung von Kohlenstoff in Form von Kohlendioxid in Energiespeichersystemen, die auf einem Kohlenstoffkreislauf beruhen, indem sie bei Einspeisung von Energie aus Kohlendioxid kohlenstoffhaltige Verbindungen (wie Kohlenwasserstoffe, Alkohole oder Ether) erzeugen und bei Ausspeisung von Energie das dabei entstehende Kohlendioxid abscheiden und speichern, um es zur weiteren Synthese von kohlenstoffhaltigen Verbindung nutzen zu können.

### Stand der Technik:

Der zunehmende Ausbau intermittierender, erneuerbarer Produktionsanlagen für elektrische Energie (v.a. Photovoltaik- und Windkraftanlagen) erfordert eine zunehmende Speicherung der damit erzeugten Energie, um einerseits den nicht in das Stromnetz einspeisbaren Überschussstrom nutzen zu können und andererseits eine Anpassung der Energieproduktion an die Energienachfragekurve zu ermöglichen.

Für die kurzzeitige Speicherung (einige Stunden) von elektrischer Energie mit geringer bis mittelgroßer Kapazität stehen eine Vielzahl von elektrischen, mechanischen und elektrochemischen Speichersystemen zur Verfügung (Kondensatoren, Schwungräder, Batterien, Druckluftspeicher). Zur mittel- und langfristigen Speicherung (Tage bis Monate) elektrischer Energie mit großer Kapazität kommen aus technischen und ökonomischen Gründen neben Pumpspeicherkraftwerken nur Speichersysteme in Frage, die die elektrische Energie in Form von chemischen Energieträgern speichern ("Power-to-chemicals"). Dabei sind neben Verfahren, die Wasserstoffgas erzeugen und speichern, auch Verfahren Stand der Technik, die unter Verwendung von Kohlendioxid kohlenstoffhaltige Verbindungen als Energiespeichermedien synthetisieren und speichern. Solche kohlenstoffbasierten Energiespeichersysteme haben gegenüber auf Wasserstoffgas beruhenden Energiespeichersystemen unter anderem den Vorteil, dass sie zur Energiespeicherung auch chemische Verbindungen synthetisieren, die bei Umgebungstemperatur in flüssiger Form vorliegen ("Power-to-liquid") und damit leicht und raumsparend transportiert und gespeichert werden können.

In solchen kohlenstoffbasierten Energiespeichersystemen zur Speicherung elektrischer Energie geschieht die Einspeisung von elektrischer Energie durch die Überführung von Kohlendioxid in kohlenstoffhaltige chemische Verbindungen (z.B. Methan, Methanol) mittels aus Wasser gewonnenem Wasserstoff und der Speicherung dieser kohlenstoffhaltigen Verbindungen (in Tankgefäßen oder unterirdischen Speichern), während die Ausspeisung von Energie auf der Oxidation des in den kohlenstoffhaltigen Verbindung enthaltenen Kohlenstoffs, das heißt auf der Rückgewinnung des in den kohlenstoffhaltigen Verbindung enthaltenen Kohlenstoffs in Form von Kohlendioxid, und auf der Speicherung dieses Kohlendioxids beruht. Damit bauen solche kohlenstoffbasierten Energiespeichersysteme einen systeminternen Kohlenstoffkreislauf auf, für dessen Aufrechterhaltung die möglichst vollständige Rückgewinnung des in den kohlenstoffhaltigen Verbindungen enthaltenen Kohlenstoffs notwendig ist. Solch kohlenstoffbasierte Energiespeichersysteme enthalten deshalb zur Ausspeisung von Energie eine Anlage, die den in den kohlenstoffhaltigen Verbindungen enthaltenen Kohlenstoff in Form von Kohlendioxid möglichst vollständig rückgewinnt und speichert und dabei durch die Oxidation von Kohlenstoff und Wasserstoff mechanische oder elektrische Energie freisetzt.

Solche kohlenstoffbasierten Energiespeichersysteme werden in folgenden Dokumenten beschrieben:
EP 0539244 beschreibt mehrere Verfahren zur Energiespeicherung, die zur Einspeisung von Energie Methanol aus Kohlendioxid synthetisieren und dieses Kohlendioxid bei der Ausspeisung von Energie zurückgewinnen.
DE 202010012734 und DE 102012103458 beschreiben ebenfalls Energiespeichersysteme, die Kohlenwasserstoffe oder Alkohole zur Energiegewinnung verbrennen, das dabei entstehende Kohlendioxid abscheiden und dieses abgeschiedene Kohlendioxid wieder zur Produktion von Kohlenwasserstoffen oder Alkoholen nutzen.

Grundsätzlich weisen solche Energiespeichersysteme mit Kohlenstoffkreislauf einen geringen energetischen Wirkungsgrad (definiert als das Verhältnis aus der dem leeren Energiespeichersystem zugeführten, elektrischen Energie zur elektrischen oder mechanischen Energie, die bei völliger Entleerung dem Energiespeichersystem entnommen werden kann) auf, da erstens die bei der Einspeicherung von elektrischer Energie verwendeten Anlagen zur Synthese der kohlenstoffhaltigen Verbindung nach jetzigem Stand der Technik geringe energetische Wirkungsgrade (definiert als das Verhältnis aus dem Heizwert oder Brennwert der synthetisierten Verbindungen zur Menge an elektrischer Energie, die der Synthese zugeführt wird) aufweisen (< 70%) und zweitens die bei der Ausspeisung von elektrischer Energie verwendeten Anlagen zur Rückgewinnung und Speicherung von Kohlendioxid bei gleichzeitiger Freisetzung von mechanischer oder elektrischer Energie ebenfalls einen geringen energetischen Wirkungsgrad (definiert als das Verhältnis der Menge der freigesetzten mechanischen oder elektrischen Energie zum Heizwert oder Brennwert der zugeführten kohlenstoffhaltigen Verbindungen) aufweisen. Der geringe Wirkungsgrad letzterer Anlagen ist nicht nur im geringen energetischen Wirkungsgrad der in diesen Anlagen verwendeten Wärmekraftmaschinen oder Brennstoffzellen begründet, sondern auch darin, dass die in diesen Anlagen durchgeführten Verfahrensschritte zur Abscheidung und Speicherung von Kohlendioxid beträchtliche Mengen von in das Energiespeichersystem eingespeister Energie aufnehmen und nur schlecht nutzbare, oft durch die Kompression von Gasen erzeugte Abwärme abgeben. Diese Kompression von Gasen wird innerhalb der Anlagen zur Rückgewinnung und Speicherung von Kohlendioxid in der Regel durchgeführt, um das Kohlendioxid für dessen Speicherung in einen ausreichend dichten Zustand zu bringen und damit einen zu großen Raumbedarf für seine Speicherung zu vermeiden. Wünschenswert wären deshalb eine Anlage und ein Verfahren, die die Rückgewinnung und Speicherung von Kohlenstoff in Form von Kohlendioxid und die dadurch erreichte Freisetzung von elektrischer oder mechanischer Energie innerhalb eines solchen Energiespeichersystems möglichst energieeffizient ermöglichen und die dazu insbesondere keine Anlagenteile oder Verfahrensschritte enthalten, die eine Kompression von Gasen vorsehen. Dabei sollte die Rückgewinnung von Kohlenstoff trotzdem möglichst vollständig und mit einer ausreichenden Speicherdichte durchgeführt werden können.

Die in EP 0539244, DE 202010012734 und DE 102012103458 genannten Anlagen und Verfahren enthalten keine detaillierten Verfahrensschritte, wie die Rückgewinnung und Speicherung von Kohlenstoff in Form von Kohlendioxid innerhalb des Energiespeichersystems durchzuführen sind.

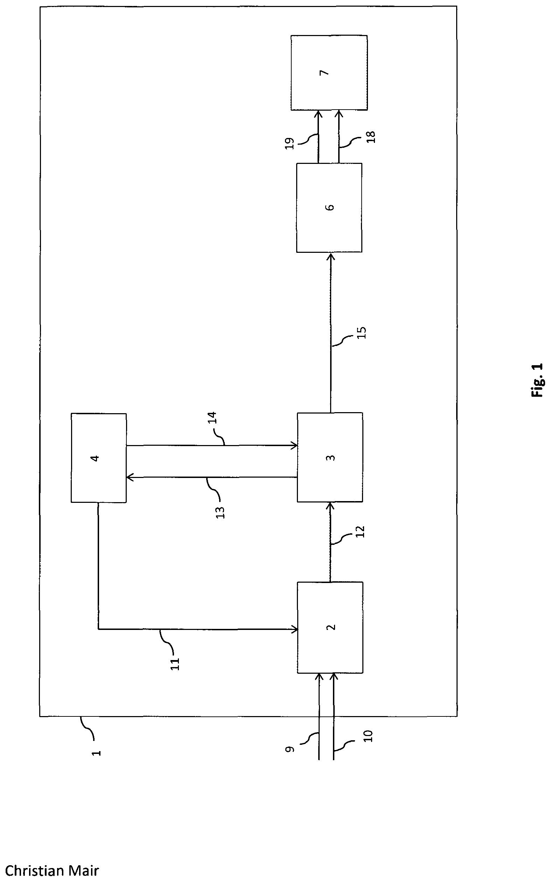

JP 2011020863 sieht ein energieeffizienzsteigerndes Verfahren vor, das bei der Ausspeisung von Energie aus dem Energiespeichersystem die energiespeichernde, kohlenstoffhaltige Verbindung mittels jener Abwärme reformiert, die durch die Oxidation jenes Wasserstoffs freigesetzt wird, der aus dem bei der Reformierung erzeugten Produktgas abgeschieden wird (vgl. Beschreibung Absatz 24 und Fig. 1). JP 2011020863 enthält allerdings keinerlei Angaben, wie das durch ein Membranverfahren abgeschiedene Kohlendioxid innerhalb des Speichersystems energieeffizient gespeichert wird und sieht auch eine durch Druckwechseladsorption durchgeführte, energieaufwendige Abscheidung des Wasserstoffs aus dem Produktgas der Reformierung vor, die auf Grund der eingeschränkten Kohlendioxid/Wasserstoff-Permeationsselektivität der genannten Membran vor der Kohlendioxidabscheidung durchgeführt wird.

Es sind zahlreiche andere industrielle Verfahren bekannt, die zur Abscheidung von Kohlendioxid aus kohlendioxidhaltigen Gasen dienen. Diese haben allerdings in der Regel die Konditionierung des abgeschiedenen Kohlendioxids für den Transport mittels Pipeline und für die unterirdische Sequestrierung zum Ziel und bringen deshalb zwecks Dichteerhöhung das abgeschiedene Kohlendioxid nicht in einen flüssigen, sondern in einen stark komprimierten, gasförmigen oder überkritischen Zustand. Dabei führen diese Verfahren in der Regel eine Kompression des abgeschiedenen Kohlendioxids durch. EP 2023066 beschreibt zum Beispiel ein Verfahren, um aus einem kohlendioxidhaltigem Synthesegas das Kohlendioxid abzuscheiden und verdampft dabei repetitiv das auskondensierte, flüssige Kohlendioxid zur Kühlung von nachströmendem Kohlendioxid, um am Ende das gesamte im Verfahren entstehende Kohlendioxidgas auf einen überkritischen Druck (>73,8 bar) zu komprimieren.

Grundsätzlich wird durch Verfahren, die bei Temperaturen unterhalb der Inversionstemperatur von Kohlendioxid (ca. 1500° K bei Normaldruck) eine Kompression von Kohlendioxid vorsehen, durch die dabei stattfindende Erwärmung des Kohlendioxids Abwärme erzeugt, die kaum effizient in elektrische oder mechanische Energie umgewandelt werden kann und damit die Energieeffizienz eines Energiespeichersystems mit Kohlenstoff-Kreislauf vermindert. Da während des Vorgangs der Energieausspeisung aus einem solchen Energiespeichersystem schon durch die während dieser Ausspeisung betriebenen Wärmekraftmaschinen oder Brennstoffzellen große Mengen an Abwärme erzeugt werden, die kaum effizient in elektrische oder mechanische Energie umgewandelt werden können, steigert die durch die Kompression von Kohlendioxid oder von anderen Gasen erzeugte Abwärme die Gesamtmenge an kaum effizient nutzbarer Abwärme innerhalb des Energiespeichersystems noch weiter.

Zur Erhöhung der Energieeffizienz von Energiespeichersystemen mit Kohlenstoffkreislauf wären also eine Anlage und ein Verfahren wünschenswert, die in solchen Energiespeichersystemen den in den kohlenstoffhaltigen Verbindungen enthaltenen Kohlenstoff in Form von Kohlendioxid vollständig zurückgewinnen und mit hoher Dichte speichern ohne Verfahrensschritte zu enthalten, die eine mechanische Kompression von Gasen, insbesondere von Kohlendioxid oder von kohlendioxidhaltigen Gasen, vorsehen.

In US 6090312 wird aus einem Produktgas einer Dampfreformierung mittels einer Membran ein Kohlendioxid/Wasserstoff-Gemisch abgeschieden, das unter anderem auch für die chemische Weiterverarbeitung und als Treibstoff vorgesehen ist (Claim 1). Zur Gewinnung von reinem Wasserstoffgas wird dort auch eine Kondensation des Kohlendioxids aus diesem Kohlendioxid/Wasserstoff-Gemisch vorgeschlagen. Außerdem wird in US 6090312 eine teilweise Rückführung des nach der Abscheidung durch die Membran verbleibenden Restgases in den Reformer beschrieben.

In EP 2181962 wird aus einem kohlenstoffhaltigen Treibstoff durch Reformierung und durch gleichzeitige Wasserstoffabscheidung mittels einer wasserstoffselektiven Membran ein kohlendioxidhaltiger Retentatmassensstrom (Fig. 5, B103) gebildet, aus dem allerdings kein Kohlendioxid auskondensiert wird. Vielmehr wird aus diesem Retentatmassenstrom (Fig. 5, B103) durch einen weiteren Verfahrensschritt mittels einer kohlendioxidselektiven Membran ein Permeatmassenstrom (Fig. 5, B108) erzeugt, aus dem dann Kohlendioxid auskondensiert wird. Außerdem sieht EP2181962 optional eine der Kohlendioxidkondensation vorgeschaltete Druckerhöhung in diesem Permeatmassestrom (Fig. 5, B108) durch eine Gaskompressionsvorrichtung (Fig. 5, B7) vor.

### Aufgabe der Erfindung:

Aufgabe der Erfindung ist es, eine Anlage und ein Verfahren zur Verfügung zu stellen, um innerhalb eines Energiespeichersystems mit Kohlenstoffkreislauf aus einer energiereichen, kohlenstoffhaltigen Verbindung (Kohlenwasserstoff, Alkohol, Ether) den darin enthaltenen Kohlenstoff in Form von Kohlendioxid möglichst vollständig abzuscheiden und mit hoher Dichte zu speichern ohne dabei eine Kompression von Gasen, insbesondere von Kohlendioxid oder von kohlendioxidhaltigen Gasen, durchzuführen.

Die Aufgabe wird durch eine Anlage gemäß den Merkmalen des Hauptanspruchs und einem Verfahren gemäß dem unabhängigen Verfahrensanspruch gelöst. Weitere vorteilhafte Ausführungen sind in den Unteransprüchen angegeben.

### Darstellung der Erfindung:

Unter dem Begriff "Kompression" wird in dieser Patentschrift - dem Gebrauch des Begriffs in physikalischen und technischen Wissenschaften entsprechend - ein allseitiges Zusammendrücken eines Körpers verstanden, das sein Volumen verringert, seine Dichte erhöht und dabei keine Änderung seines Aggregatzustandes bewirkt.

Unter dem Begriff "Gaskompression" wird in dieser Patentschrift die Kompression von Gasen verstanden. Wird ein Gas unterhalb seiner Inversionstemperatur komprimiert, so wird dabei Wärme freigesetzt. Da zum Beispiel Kohlendioxid eine Inversionstemperatur von ca. 1500° K bei Normaldruck aufweist, führt die Kompression von Kohlendioxid in technischen Verfahren in der Regel zur Freisetzung von Wärme. Ebenso führt auch die Kompression von wasserdampfhaltigen, kohlenwasserstoffhaltigen, alkoholhaltigen oder etherhaltigen Gasen bei Temperaturen, die in technischen Verfahren üblicherweise auftreten, zur Freisetzung von Wärme.

Unter dem Begriff "Umgebungstemperatur" wird in dieser Patentschrift die Temperatur des die erfindungsgemäße Anlage umgebenden Mediums (z.B. Luft) verstanden.

In dieser Patentschrift wird mit dem Begriff "katalytische Dampfreformierung" jene chemische Gleichgewichtsreaktion verstanden, in der Kohlenwasserstoffe, Alkohol oder Ether unter Zuführung von Wasser bei entsprechender Temperatur und in Gegenwart geeigneter Katalysatoren in ein Gasgemisch übergeführt werden, das neben Wasserstoffgas auch verschieden große Anteile an Kohlenmonoxid und Kohlendioxid enthält. Entsprechende Katalysatoren sind für verschiedenste Kohlenwasserstoff, Alkohole und Ether wohlbekannt. Für eine Dampfreformierung von Methanol können z.B. kupferbasierte Katalysatoren wie Cu/ZnO/Al₂O₃ eingesetzt werden.

Kohlenmonoxid und Kohlendioxid stehen beim Prozess der Dampfreformierung ebenfalls in einem chemischen Gleichgewichtsverhältnis zueinander (Wassergas-Shift-Reaktion). Außerdem können beim Prozess der Dampfreformierung in Abhängigkeit von den verwendeten Ausgangsstoffen noch weitere Gleichgewichtsreaktionen auftreten. Im Falle von Methanol können die Dampfreformierung und die parallel dazu stattfindenden chemischen Prozesse durch folgende Reaktionsgleichungen zusammengefasst werden:

(1) CH₃OH + H₂O ⇔ CO₂ + 3H₂

ΔH°_{298 K} = + 49.51 kJ/mol

(2) CO + H₂O ⇔ CO₂ + H₂

ΔH°_{298 K} = - 41.19 kJ/mol Wassergas-Shift-Reaktion

(3) CH₃OH ⇔ CO + 2H₂

ΔH°_{298 K} = + 90.70 kJ/mol Methanol Decomposition

Da die Dampfreformierung in der Regel mit einem überstöchiometrischen Wasserüberschuss durchgeführt wird, enthält das dabei erzeugte Produktgas in der Regel auch noch Wasserdampf.

Unter dem Begriff "Permeatseite" einer wasserstoffabscheidenden Membran wird in dieser Patentschrift jene Seite der Membran verstanden, an welcher der von der Membran abgeschiedene Wasserstoff aus der Membran austritt.

Unter dem Begriff "Permeatmassestrom" wird in dieser Patentschrift jener Massestrom verstanden, der eine wasserstoffabscheidende Membran an der Permeatseite umspült.

Unter dem Begriff "Retentatseite" einer wasserstoffabscheidenden Membran wird in dieser Patentschrift jene Seite der Membran verstanden, an welcher der Wasserstoff in die Membran eintritt.

Unter dem Begriff "Retentatmassestrom" wird in dieser Patentschrift jener Massestrom verstanden, der eine wasserstoffabscheidende Membran an der Retentatseite umspült. Im Falle eines Membranreaktors, in dem eine katalytische Dampfreformierung eines Stoffes der Gruppe Kohlenwasserstoffe/Ether/Alkohole und eine Abscheidung von Wasserstoffgas durchgeführt wird, enthält dieser Retentatmassestrom Kohlendioxid und kann bei überstöchiometrischer Beimengung von Wasser zur Durchführung der Dampfreformierung auch Wasser enthalten.

Unter dem Begriff "Kohlendioxid-geschlossener Permeatmassestromkreislauf" wird in dieser Patentschrift ein im Kreis (z.B. über den Anodenraum einer Brennstoffzelle oder einen Rekuperator) geführter Permeatmassestrom verstanden, der eine konstante Menge an Kohlendioxid enthält. Andere Stoffe, wie z.B. Wasser, können in diesen Kreislauf eingebracht oder aus diesem abgeschieden werden.

Unter dem Begriff "Auskondensation" eines Stoffes aus einem Gasgemisch wird in dieser Patentschrift das Abkühlen des Gasgemisches unter jene Temperatur verstanden, bei der der Sättigungsdampfdruck des auskondensierten Stoffes den Partialdruck dieses Stoffes im Gasgemisch unterschreitet und sich deshalb eine flüssige Phase bildet, die den auskondensierten Stoff enthält. Darüber hinaus wird mit dem Begriff "Auskondensation" in dieser Patentschrift auch die Trennung dieser flüssigen Phase von der verbleibenden gasförmigen Phase mitgemeint, die durch eine entsprechende Vorrichtung wie z.B. einen Kondensatableiter durchgeführt werden kann.

Die erfindungsgemäße Anlage (1) zur gaskompressionsfreien Rückgewinnung und Speicherung von Kohlenstoff in Form von flüssigem Kohlendioxid (19) aus Stoffen (9) der Gruppe Kohlenwasserstoffe/Ether/Alkohole weist folgende Vorrichtungen auf:
- mindestens einen Dampferzeuger (2) zur Verdampfung von Wasser und eines Stoffes der Gruppe Kohlenwasserstoffe/Ether/Alkohole,
- mindestens einen Membranreaktor (3) zur katalytischen Dampfreformierung eines Stoffes der Gruppe Kohlenwasserstoffe/Ether/Alkohole und zur Abscheidung von Wasserstoffgas aus dem durch die Dampfreformierung erzeugten Produktgas,
- mindestens eine Vorrichtung (6) zur Auskondensation von Kohlendioxid aus einer Kohlendioxid enthaltenden Gasmischung,
- mindestens einen Speichertank (7) für Kohlendioxid,
- mindestens eine Vorrichtung (4) zur Oxidation von Wasserstoffgas, ausgewählt aus der Gruppe der Verbrennungskraftmaschinen oder aus der Gruppe der Brennstoffzellensysteme,
dadurch gekennzeichnet, dass
- der Dampferzeuger (2) dazu ausgelegt ist, Dampf von über 5,18 bar zu erzeugen, und der Membranreaktor (3), die Vorrichtung (6) zur Auskondensation von Kohlendioxid und der Speichertank (7) für Kohlendioxid mit Gasdrücken von über 5, 18 bar betreibbar sind,
- der Dampferzeuger (2) zur Verdampfung von Wasser und eines Stoffes der Gruppe Kohlenwasserstoffe/Ether/Alkohole eine Einlassvorrichtung zur Zufuhr von Wärme (11) aufweist und mindestens einen Rekuperator enthält,
- die Vorrichtung (4) zur Oxidation von Wasserstoffgas mit einer Temperatur betreibbar ist, die über der Betriebstemperatur des Dampferzeugers (2) liegt,
- die Vorrichtung (6) zur Auskondensation von Kohlendioxid einen Rekuperator aufweist und dass zwischen den genannten Vorrichtungen folgende Leitungen bestehen:
- mindestens eine Leitung zum Transport von Gas mit über 5,18 bar Druck, die den Dampferzeuger (2), den Membranreaktor (3), und die Vorrichtung (6) zur Auskondensation von Kohlendioxid miteinander verbindet,
- mindestens eine Leitung zum Transport eines flüssigen Mediums mit über 5,18 bar Druck, die die Vorrichtung (6) zur Auskondensation von Kohlendioxid und den Speichertank (7) für Kohlendioxid verbindet,
- mindestens eine Leitung zum Transport eines wasserstoffhaltigen Gases, der den Membranreaktor (3) und die Vorrichtung (4) zur Oxidation von Wasserstoffgas verbindet und die für die Zuführung eines wasserstoffhaltigen Gases in die Vorrichtung (4) zur Oxidation von Wasserstoffgas nutzbar ist. Vorteilhafte Ausführungen ergeben sich durch die Merkmale der abhängigen Ansprüche.

Die in einer erfindungsgemäßen Anlage (1) enthaltene Vorrichtung (4) zur Oxidation von Wasserstoffgas (Wärmekraftmaschine oder Brennstoffzelle) produzieren beim derzeitigen Stand der Technik auf Grund ihres niedrigen energetischen Wirkungsgrades große Mengen an Abwärme. Um diese Abwärme zur Durchführung der Verdampfung nutzbar zu machen, weist in einer erfindungsgemäßen Anlage (1) der Dampferzeuger (2) zur Verdampfung von Wasser und eines Stoffes der Gruppe Kohlenwasserstoffe/Ether/Alkohole eine Einlassvorrichtung für die Zufuhr von Wärme (11) auf und enthält einen Rekuperator (z. B. Plattenwärmetauscher, Spiralwärmetauscher, Rohrbündelwärmetauscher). Der Dampferzeuger (2) zur Verdampfung von Wasser und eines Stoffes der Gruppe Kohlenwasserstoffe/Ether/Alkohole ist in einer erfindungsgemäßen Anlage (1) außerdem so ausgelegt, dass er ein Gas von über 5,18 bar erzeugt, da dies der kleinste thermodynamisch mögliche Druck für die dem Dampferzeuger (2) nachgeschaltete Kondensation von Kohlendioxid ist und eine erfindungsgemäße Anlage keinen Gaskompressor enthält, der zur weiteren Druckerhöhung innerhalb der Anlage dienen könnte. Der Dampferzeuger (2) ist in einer erfindungsgemäßen Anlage (1) außerdem so ausgelegt, dass er ein überhitztes Gas mit einer Temperatur erzeugt, die nicht unterhalb der Betriebstemperatur des Membranreaktors (3) liegt. Bei Verwendung von Methanol als kohlenstoffhaltiger Verbindung zur Energiespeicherung liegt diese Temperatur etwa bei 250-300° C. Dampferzeuger, die einen Rekuperator enthalten und ein Gas von mehr als 5,18 bar (bis zu mehr als 200 bar) und von bis zu 500-600° C erzeugen sind Stand der Technik. Sie werden vorteilhafterweise in der Regel dreistufig (mit Vorwärmer, Verdampfer und Überhitzer) gebaut. Insbesondere sind Dampferzeuger für Wasser und für Methanol, die Gase von 300° C erzeugen, Stand der Technik.

Membranreaktoren zur katalytischen Dampfreformierung eines Stoffes der Gruppe Kohlenwasserstoffe/Ether/Alkohole und zur Abscheidung von Wasserstoffgas aus dem durch diese Dampfreformierung erzeugten Produktgas sind ebenfalls Stand der Technik. Verschiedene Ausführungsformen solcher Membranreformer zur Dampfreformierung sind in der Literatur beschrieben (vgl. z.B: Gallucci, F., Basile, A. & Hai, F. Ibney: Introduction - A review of membrane reactors. In: A. Basile & F.Gallucci (Hg.): Membranes for membrane reactors: preparation, optimization and selection. 2011. 1-61). Bei Temperaturen von über 250° kommen Membranreaktoren mit Metallmembranen (z.B. Palladiumlegierungen), Keramikmembranen, Kohlenstoffmembranen oder Zeolithmembranen zum Einsatz. Diese sind bei Temperaturen bis zu 800° C hitzestabil und weisen bei Verwendung einer entsprechenden Trägerstruktur auch eine ausreichende Druckstabilität bis zu 60 bar und mehr auf. Allerdings unterscheiden sich die verschiedenen Membransorten teilweise beträchtlich in ihrer Permeationsselektivität: Während gewisse Metallmembranen (z.B. Palladiummembranen) eine reine Abscheidung von Wasserstoff aus Wasserstoff enthaltenden Gasen erlauben, erreichen z.B. Zeolith- oder Kohlenstoffmembranen deutlich geringere Permeationsselektivitäten von Wasserstoff gegenüber anderen Gasen wie Kohlendioxid oder gasförmigem Wasser. Da eine erfindungsgemäße Anlage den Kohlenstoff aus dem im Energiespeichersystem verwendeten Stoff (9) der Gruppe Kohlenwasserstoffe/Ether/Alkohole möglichst vollständig zurückgewinnen soll, ist jegliche Permeation von Kohlendioxid in den Permeatmassestrom des Membranreaktors nachteilig, wenn dieser Permeatmassestrom in der nachgeschalteten Vorrichtung (4) zur Oxidation von Wasserstoffgas (Wärmekraftmaschine oder Brennstoffzelle) mit Luft oxidiert und der dabei entstehende Abgasstrom in die Atmosphäre entlassen wird. Dadurch kommt es bei eingeschränkter Wasserstoff/Kohlendioxid-Permeationsselektivität der Membran zu einer unvollständigen Rückgewinnung von Kohlenstoff innerhalb des Energiespeichersystems, was bei Nicht-Zuführung von weiterem Kohlenstoff in das Energiespeichersystem zu einem Erliegen dieses Kohlenstoffkreislaufes innerhalb des Energiespeichersystems und damit zu einer Funktionsstörung des Energiespeichersystems führt. Eine vorteilhafte Variante der erfindungsgemäßen Anlage (1), die eine Verwendung von Membranen mit geringer Wasserstoff/Kohlendioxid-Permeationsselektivität erlaubt, ohne damit das Problem einer unvollständigen Rückgewinnung von Kohlenstoff zu verursachen, wird in den abhängigen Patentansprüchen 2 und 8 geoffenbart und soll weiter unten beschrieben werden.

Bei der Vorrichtung (6) zur Auskondensation von Kohlendioxid aus einer Kohlendioxid enthaltenden Gasmischung können verschiedene Bauarten von Rekuperatoren (z. B. Plattenwärmetauscher, Spiralwärmetauscher, Rohrbündelwärmetauscher) verwendet werden, wie sie nach dem Stand der Technik bekannt sind und leicht für einen Betriebsdruck über 5,18 bar ausgelegt werden können.

Der Speichertank (7) für Kohlendioxid ist so auszulegen, dass er das in der erfindungsgemäßen Anlage auskondensierte Kohlendioxid ohne Druckverlust speichert. Dieses Kondensat kann neben Kohlendioxid noch verschieden große Anteile an Wasser enthalten, sowie Reste des Stoffs (9) der Gruppe Kohlenwasserstoffe/Ether/Alkohole, die im Membranreaktor nicht umgesetzt wurden. Wird die erfindungsgemäße Anlage bei einem geringen Druck (von 5,18 bar bis ca. 20 bar) betrieben und geschieht deshalb die Kondensation von Kohlendioxid und die Speicherung dieses Kondensats bei diesem geringen Druck, so ähneln die Betriebsbedingungen des Speichertanks (7) für Kohlendioxid jenen von Tanks zur Speicherung von LPG (Liquified Petroleum Gas) und es kann in ihrer ingenieurstechnischen Auslegung auf Konzepte und langjährige Erfahrungswerte bei LPG Speichersystemen zurückgegriffen werden. Speichertanks bis zu Drücken von 700 bar sind Stand der Technik und werden z.B. für die Hochdruckspeicherung von Wasserstoff eingesetzt.

Die Vorrichtung (4) zur Oxidation von Wasserstoffgas, die in einer erfindungsgemäßen Anlage mittels einer Rohrleitung mit dem Membranreaktor verbunden ist und den im Membranreaktor erzeugten wasserstoffhaltigen Permeatmassestrom (13) oxidiert, kann als Wärmekraftmaschine (Verbrennungsmotor, Gasturbine) oder als Brennstoffzelle ausgeführt sein. Erfindungsgemäß weist diese Vorrichtung eine Betriebstemperatur auf, die über der Betriebstemperatur des Membranreaktors (3) liegt. Da die Dampfreformierung von Stoffen aus der Gruppe Kohlenwasserstoffe/Ether/Alkohole im Membranreaktor (3) in der Regel bei Temperaturen über 250°C durchgeführt wird, kommen vor allem Brennstoffzellen in Frage, die eine entsprechende Betriebstemperatur aufweisen (z.B. Festoxidbrennstoffzellen). Auf Grund der über der Betriebstemperatur des Membranreaktors (3) liegenden Betriebstemperatur der Vorrichtung (4) zur Oxidation von Wasserstoffgas, kann die von dieser Anlage (4) erzeugte Abwärme dem im Dampferzeuger (2) enthaltenen Rekuperator zugeführt und so der dort stattfindende Verdampfungsprozess mit Prozesswärme versorgt werden.

Alle genannten Bestandteile einer Anlage zur Durchführung des erfindungsgemäßen Verfahrens müssen im Rahmen ingenieurstechnischer Routinearbeit in ihrer Auslegung, insbesondere in ihrer Kapazität, aufeinander abgestimmt und mit einem gemeinsamen Steuerungssystem versehen werden.

Um das oben genannte Problem der Verwendung von Membranen mit eingeschränkter Wasserstoff/Kohlendioxid-Permeationsselektivität zu lösen, besteht in einer Variante einer erfindungsgemäßen Anlage die Vorrichtung (4) zur Oxidation von Wasserstoffgas in einer Festoxidbrennstoffzelle und enthält außerdem - neben der oben genannten Leitung zum Transport des wasserstoffhaltigen Permeatmassestroms (13) aus dem Membranreaktor in die Festoxidbrennstoffzelle - eine weitere Leitung, die die genannte Festoxidbrennstoffzelle mit dem Membranreaktor (3) verbindet und die dazu dient, den im Anodenraum der Festoxidbrennstoffzelle oxidierten Permeatmassestrom (14) an die Permeatseite der Membran des Membranreaktors (3) zurückzuführen. Durch die Verwendung einer Festoxidbrennstoffzelle als Vorrichtung (4) zur Oxidation von Wasserstoffgas und die genannte Rückführung des oxidierten Permeatmassestroms (14) in den Membranreaktor (3) wird Kohlendioxid, das auf Grund der eingeschränkten Wasserstoff/Kohlendioxid-Permeationsselektivität der Membran durch die Membran des Reaktors in den wasserstoffhaltigen Permeatmassestrom (13) gelangt, nicht in die Atmosphäre entlassen.

Eine weitere Variante einer erfindungsgemäßen Anlage enthält eine Vorrichtung (5) zur Auskondensation von Wasser, die dem Membranreaktor (3) und der Vorrichtung (6) zur Auskondensation von Kohlendioxid aus einer Kohlendioxid enthaltenden Gasmischung zwischengeschaltet ist. Außerdem enthält diese Variante einer erfindungsgemäßen Anlage eine Leitung zum Transport von Wasser, die die genannte Vorrichtung (5) zur Auskondensation von Wasser und den Dampferzeuger (2) zur Verdampfung von Wasser und eines Stoffes der Gruppe Kohlenwasserstoffe/Ether/Alkohole verbindet. Durch diese Vorrichtung (5) kann die Wassermenge, die sich nach der Dampfreformierung des Methanols im Retentatmassestrom des Membranreaktors befindet, reduziert, dadurch die Konzentration von Kohlendioxid im Retentatmassestrom erhöht und die Raumeffizienz (definiert als das Verhältnis aus dem durch das flüssige Kohlendioxid im Speicherraum beanspruchte Volumen zum Volumen des gesamten Speicherraums) bei der Speicherung des flüssigen Kohlendioxids (19) im Speichertank (7) erhöht werden.

Eine weitere Variante einer erfindungsgemäßen Anlage enthält eine Leitung zum Gastransport, die die Vorrichtung (6) zur Auskondensation von Kohlendioxid aus einer Kohlendioxid enthaltenden Gasmischung mit dem Dampferzeuger (2) oder mit dem Membranreaktor (3) verbindet. Diese Leitung erlaubt es, das bei der Kondensation von Kohlendioxid entstehende Restgas (18) nicht dem Speichertank (7) für Kohlendioxid zuzuführen und damit den Speicherraum im Speichertank (7) effizient zur Einlagerung von flüssigem Kohlendioxid (19) zu nutzen.

Um bei geringen Betriebsdrücken von unter ca. 70 bar eine Kondensation von Kohlendioxid herbeiführen zu können, sind Temperaturen unterhalb häufig auftretender Umgebungstemperaturen (ca. +25°) nötig. Zur energieeffizienten Erzeugung dieser zur Kondensation und Speicherung von Kohlendioxid nötigen Kälte enthält eine weitere Variante einer erfindungsgemäßen Anlage eine Absorptionskältemaschine (8), einen Speichertank (7) für Kohlendioxid, der eine Vorrichtung zur Kühlung des Tankinhaltes auf ein Temperaturniveau unterhalb der Umgebungstemperatur enthält, eine Leitung zum Transport eines Kälteträgermediums unterhalb der Umgebungstemperatur, die die Absorptionskältemaschine (8) und die Vorrichtung (6) zur Auskondensation von Kohlendioxid verbindet und eine Leitung zum Transport eines Kälteträgermediums unterhalb der Umgebungstemperatur, die die Absorptionskältemaschine (8) und den Speichertank (7) für Kohlendioxid verbindet. Dadurch kann in der Absorptionskältemaschine (8) mittels Wärme (11) aus der Vorrichtung (4) zur Oxidation von Wasserstoffgas (Wärmekraftmaschine oder Brennstoffzelle) Kälte (17) erzeugt werden, die zur Kondensation des Kohlendioxids aus dem Retentatmassestrom (15) unterhalb der Umgebungstemperatur und zur Kühlung des Speichertanks (7) für Kohlendioxid genutzt werden kann. Dafür kann z. B. eine ein- oder zweistufige Ammoniak-Absorptionskälteanlage eingesetzt werden. Diese ist in verschiedenen Leistungsklassen Stand der Technik, kann Temperaturen von unter -50° C erreichen und ermöglicht so die Kondensation von Kohlendioxid schon bei einem niedrigen Druck von unter 6 bar. Die Leitungen zum Transport eines Kälteträgermediums können aus geschlossenen Rohrkreisläufen bestehen und als Kälteträgermedium kann z.B. Ammoniak verwendet werden. Für die Vorrichtung zur Kühlung des Tankinhalts auf ein Temperaturniveau unterhalb der Umgebungstemperatur können wiederum verschiedene Bauarten von Rekuperatoren verwendet werden, wie sie nach dem Stand der Technik bekannt sind (z. B. Plattenwärmetauscher, Spiralwärmetauscher, Rohrbündelwärmetauscher).

Eine weitere Variante einer erfindungsgemäßen Anlage enthält zwei Vorrichtungen (5) zur Auskondensation von Wasser aus einer Wasserdampf enthaltenden Gasmischung, wovon eine dieser Vorrichtungen mittels einer Leitung zum Transport eines Kälteträgermediums unterhalb der Umgebungstemperatur mit der Absorptionskältemaschine (8) verbunden ist.

Der Kern der in dieser Patentschrift beschriebenen Erfindung ist ein Verfahren zur gaskompressionsfreien und vollständigen Rückgewinnung von Kohlenstoff in Form von flüssigem Kohlendioxid aus energiereichen, kohlenstoffhaltigen Verbindungen (Kohlenwasserstoff, Alkohol, Ether) und dessen Speicherung mit hoher Dichte, gekennzeichnet durch die folgenden Schritte:
- Schritt 1: Erzeugung eines überhitzten Gases (12) mit mehr als 5,18 bar Druck durch Verdampfen und Erhitzen von Wasser (10) und von einem Stoff (9) der Gruppe Kohlenwasserstoffe/Ether/Alkohole in einem Dampferzeuger (2), dem Wärme (11) zugeführt wird;
- Schritt 2: Katalytische Dampfreformierung des in Schritt 1 erzeugten, überhitzten Gases (12) mit mehr als 5,18 bar Druck und Erzeugung eines Retentatmassestroms (15) durch Abscheidung von Wasserstoffgas aus dem durch die Dampfreformierung erzeugten Produktgas mit Hilfe eines Membranverfahrens;
- Schritt 3: Erzeugung eines Restgases (18) durch Auskondensation von flüssigem Kohlendioxid (19) aus dem in Schritt 2 erzeugten Retentatmassestrom (15);
- Schritt 4: Speicherung des in Schritt 3 auskondensierten, flüssigen Kohlendioxids (19) in einem Speichertank (7) für Kohlendioxid;
- Schritt 5: Freisetzung von Wärme (11) durch Oxidation des in Schritt 2 erzeugten und abgeschiedenen Wasserstoffgases, wobei die Temperatur bei der Oxidation des in Schritt 2 erzeugten und abgeschiedenen Wasserstoffgases höher ist als die Temperatur der katalytischen Dampfreformierung in Schritt 2, sowie von elektrischer und/oder mechanischer Energie. Vorteilhafte Ausführungen ergeben sich durch die Merkmale der abhängigen Ansprüche.

Damit das im Dampferzeuger (2) erzeugte Gas ausreichend thermische Energie für die im Schritt 2 vorgesehene Dampfreformierung enthält, wird in einem erfindungsgemäßen Verfahren in Schritt 1 ein überhitztes Gas (12) hergestellt.

Im Dampferzeuger (2) muss Gas mit über 5,18 bar Druck erzeugt werden, da dieses Gas in einem erfindungsgemäßen Verfahren, nachdem es den Membranreaktor (3) durchlaufen hat, in der Vorrichtung (6) zur Auskondensation von Kohlendioxid noch einen Druck von über 5,18 bar aufweisen muss, um durch Abkühlung verflüssigt werden zu können. Der tatsächlich notwendige Gasdruck in der Vorrichtung (6) zur Auskondensation von Kohlendioxid richtet sich allerdings nach der Zusammensetzung des Retentatmassestroms (15): Erfolgt die Wasserstoffabscheidung in Schritt 2 nur unvollständig und enthält deshalb der Retentatmassestrom (15) vermehrt Anteile von Wasserstoff, erhöht sich der notwendige Druck zur Kohlendioxidkondensation, da der Partialdruck des Kohlendioxids im Retentatmassestrom (15) mindestens 5,18 bar betragen muss. Dementsprechend muss in diesem Fall auch im Dampferzeuger (2) ein überhitztes Gas (12) mit höherem Druck erzeugt werden.

Da in einem erfindungsgemäßen Verfahren in Schritt 5 Wärme (11) mit einer Temperatur über der Temperatur der katalytischen Dampfreformierung in Schritt 2 freigesetzt wird, kann diese Wärme (11) dem Rekuperator des Dampferzeugers (2) in Schritt 1 zugeführt werden, um den dort stattfindenden Verdampfungs- und Überhitzungsprozess zu betreiben. Diese Zuführung von Wärme (11) aus Schritt 5 kann durch die direkte Zuführung des bei der Oxidation entstehenden Abgases in den Rekuperator erfolgen oder mittels eines dazwischengeschalteten Wärmeträgermediums (z.B. Öl), das durch einen zusätzlichen Wärmetauscher vom genannten Abgas erhitzt wird.

Auf Grund der Durchführung der Dampfreformierung in einem Membranreaktor mit wasserstoffpermeabler Membran wird das thermodynamische Gleichgewicht der Dampfreformierung zugunsten von Wasserstoff und Kohlendioxid verschoben, sodass in einem Membranreaktor eine nahezu vollständige Zersetzung des zugeführten Stoffes (9) aus der Gruppe Kohlenwasserstoffe/Ether/Alkohole zu Wasserstoffgas und Kohlendioxid erreicht werden kann. In Abhängigkeit von der Größe und Beschaffenheit der Membranfläche, dem Paritaldruck des Wasserstoffs im durch die Dampfreformierung erzeugten Produktgas sowie der Betriebsart des Membranreaktors (Gegenstromverfahren oder Gleichstromverfahren) wird in Schritt 2 eine verschieden große Abscheideeffizienz von Wasserstoff (definiert als das Verhältnis der im Membranreaktor erzeugten Wasserstoffmenge zu der durch die Membran abgeschiedenen Wasserstoffmenge) erreicht. Diese kann bei entsprechendem Partialdruck des Wasserstoffs und entsprechender Größe und Beschaffenheit der Membran auch nahezu 100 % betragen (vgl. Gallucci, F., Basile, A.: Co-current and Counter-current modes for methanol steam reforming membrane reactor. International Journal of Hydrogen Energy 32 (2006) 2243-2249).

Die Auskondensation von flüssigem Kohlendioxid (19) in Schritt 3 aus dem in Schritt 2 erzeugten Retentatmassestroms (15) kann wiederum durch Rekuperatoren erfolgen. Die Kondensation von Kohlendioxid erfolgt gemäß der Kondensationskurve von Kohlendioxid bei Temperaturen und Partialdrücken von ca. 31° C / 74 bar bis ca. - 56,6° C / 5,185 bar. Der Partialdruck von Kohlendioxid im Retentatmassestrom (15) muss deshalb über 5,18 bar liegen, um eine Kondensation des Kohlendioxids zu ermöglichen, und in Schritt 1 des Verfahrens aufgebaut werden.

Das in Schritt 3 auskondensierte, flüssige Kohlendioxid (19) wird in einem erfindungsgemäßen Verfahren in flüssiger Form in einem Speichertank (7) für Kohlendioxid gespeichert. Dieser muss deshalb ebenfalls mit einem Innendruck von mindesten 5,18 bar betrieben werden.

Die in Schritt 5 durchgeführte Oxidation des in Schritt 2 erzeugten und abgeschiedenen Wasserstoffgases zur Freisetzung von elektrischer und/oder mechanischer sowie von thermischer Energie kann in einer Brennstoffzelle oder einer Wärmekraftmaschine vorgenommen werden. Das Temperaturniveau der im Schritt 5 freigesetzten Wärme (11) liegt sowohl bei Verwendung von Verbrennungskraftmaschinen als auch bei Verwendung von gewissen Brennstoffzellen (insbesondere Festoxidbrennstoffzellen) hoch genug, um die Dampfreformierung gewisser Alkohole und Ether (insbesondere von Methanol) ohne weitere Wärmequelle (etwa auch ohne eine autotherme Reformierung durch partielle Oxidation der Alkohole) zu betreiben. So weisen Abgase von Verbrennungsmotoren Temperaturen bis zu 450°C auf, während die Dampfreformierung von Methanol bei Temperaturen von etwa 250-350° durchgeführt werden kann. Festoxidbrennstoffzellen arbeiten bei Temperaturen von über 650°C.

Eine energiebilanzielle Analyse zeigt auch auf, dass die Menge an in Schritt 5 freigesetzter Wärme (11) für die Wärmeversorgung des Dampferzeugers (2) im Schritt 1 ausreicht. Dies trifft insbesondere auf Energiesysteme zu, die Methanol als kohlenstoffhaltigen Energieträger nutzen: So wird etwa zur Verdampfung und Überhitzung von 1 mol Wasser und 1 mol Methanol (von 20° C auf 280° C) eine Wärmemenge von etwa 105 kJ benötigt. Die in Schritt 2 vorgesehene Dampfreformierung von 1 mol Methanol und 1 mol Wasser zu 1 mol Kohlendioxid und 3 mol Wasserstoffgas hat nach den oben angeführten Gleichungen bei Standardbedingungen einen Wärmebedarf von 50 kJ/mol_{[Methanol+Wasser]}. Die in Schritt 1 zuzuführende Wärmemenge beträgt also insgesamt etwa 155 kJ für die Umsetzung von 1 mol Methanol und 1 mol Wasser (beides bei 20° C) zu 1 mol Kohlendioxid und 3 mol Wasserstoffgas (beides bei 280° C). Im Vergleich dazu beträgt die durch Oxidation von 3 mol Wasserstoffgas zu Wasser freiwerdende Energiemenge etwa 1272 kJ (bzw. 1455 kJ bei Kondensation des Wassers). Auch wenn nur 35 % dieser Energiemenge als Wärme abgegriffen und dem Rekuperator des Dampferzeugers zugeführt werden kann - was etwa 445 kJ (bzw. 494,7 kJ) entspricht - so übersteigt diese Wärmemenge dennoch die für die Verdampfung und Überhitzung nötige Wärmemenge um ein Mehrfaches.

Während - wie oben erwähnt - gewisse Metallmembranen (z.B. Palladiummembranen) eine reine Abscheidung von Wasserstoff aus Wasserstoff enthaltenden Gasen erlauben, erreichen andere Membranen wie etwa Zeolith- oder Kohlenstoffmembranen deutlich geringere Permeationsselektivitäten von Wasserstoff gegenüber Gasen wie z.B. Kohlendioxid oder gasförmigem Wasser. Bei molsiebenden Membranen wie Zeolith- oder Kohlenstoffmembranen ist die Wasserstoffpermeationsselektivität sowohl gegenüber Kohlendioxid als auch Wasser relativ gering. Um eine möglichst vollständige Rückgewinnung von Kohlenstoff in Form von Kohlendioxid zu erreichen, sieht deshalb eine Variante eines erfindungsgemäßen Verfahrens bei Verwendung von Membranen mit geringer Wasserstoff/Kohlenstoff-Permeationsselektivität den Aufbau eines Kohlendioxid-geschlossenen Permeatmassestromkreislaufs vor: indem die Oxidation des im Falle geringer Wasserstoff/Kohlenstoff-Permeationsselektivität auftretenden, kohlendioxid- und wasserstoffhaltigen Permeatmassestroms (13) in einer Festoxidbrennstoffzelle vorgenommen wird, wird der in diesem Massestrom enthaltende Wasserstoff zu Wasser oxidiert ohne dass dabei das Kohlendioxid aus dem Permeatmassestrom entweichen kann. Wird der so erzeugte oxidierte Permeatmassestrom (14), der aus dem Anodenraum der Festoxidbrennstoffzelle als Abgas entweicht, zurück an die Permeatseite der Membran des Membranreaktors (3) geführt, so erhöht sich dort der Partialdruck für Kohlendioxid. Durch den weiteren Betrieb dieses Kreislaufs erhöht sich dieser Partialdruck für Kohlendioxid so weit, dass er im Gleichgewicht mit dem Partialdruck für Kohlendioxid an der Retentatseite der Membran des Membranreaktor (3) steht, so dass die weitere Diffusion von Kohlendioxid von der Retentatseite an die Permeatseite der Membran bilanziell vollständig zum Erliegen kommt und sich damit ein Kohlendioxid-geschlossener Permeatmassestromkreislauf aufbaut, der aus dem wasserstoffhaltigen Permeatmassestrom (13) vom Membranreaktor (3) zur Festoxidbrennstoffzelle und aus dem oxidierten Permeatmassestrom (14) von der Festoxidbrennstoffzelle zum Membranreaktor (3) besteht.

Das sich in diesem Kohlendioxid-geschlossenen Permeatmassestromkreislauf ansammelnde, durch die Oxidation des Wasserstoffs in der Festoxidbrennstoffzelle erzeugte, gasförmige Wasser wird bei Verwendung von molsiebenden Membranen (wie Zeolith- oder Kohlenstoffmembranen), die nicht nur eine geringe Wasserstoffpermeationsselektivität gegenüber Kohlendioxid, sondern auch gegenüber Wasser aufweisen, auf folgende Weise durch diese Membran aus dem Permeatmassestromkreislauf abgeschieden: Im Laufe des Betriebs dieses Kohlendioxid-geschlossenen Permeatmassestromkreislaufs erhöht sich nicht nur der Partialdruck des Kohlendioxids an der Permeatseite der Membran, sondern auch jener des Wassers, so dass es, sobald der Partialdruck von Wasser im Permeatmassestromkreislauf höher ist als jener im Retentatmassestrom, zu einer Diffusion von Wasser von der Permeatseite an die Retentatseite der Membran und damit zu einem Abscheidungsprozess von Wasser aus dem Permeatmassestromkreislauf kommt.

Wenn keine Membran mit geringer Wasserstoffpermeationsselektivität gegenüber Kohlendixoid und Wasser verwendet wird, kann Wasser aus dem Permeatmassestromkreislauf durch Auskondensation abgeschieden werden. Dieses auskondensierte Wasser kann anschließend dem Dampferzeuger (2) zugeführt werden, um einen Verlust von Kohlenstoff innerhalb des erfindungsgemäßen Verfahrens durch in diesem Wasser gelöstes Kohlendioxid zu vermeiden.

In einer Variante des erfindungsgemäßen Verfahrens wird aus dem Retentatmassestrom (15) Wasser (16) oberhalb der Umgebungstemperatur auskondensiert, bevor der dadurch entstehende, wasserreduzierte Retentatmassestrom (15) dem Schritt 3 des erfindungsgemäßen Verfahrens zugeführt wird. Dieses auskondensierte Wasser (16) wird anschließend dem Schritt 1 des erfindungsgemäßen Verfahrens zugeführt. Durch die Wasserreduzierung im Retentatmassestrom (15) kann der verfügbare Speicherraum im Speichertank (7) für Kohlendioxid effizienter für die Kohlendioxidspeicherung genutzt werden. Diese oberhalb der Umgebungstemperatur durchgeführte Auskondensation von Wasser kann mittels eines Rekuperators durchgeführt werden, der mit Umgebungsluft oder einem anderen Medium auf dem Temperaturniveau der Umgebung betrieben wird. Das auskondensierte Wasser (16) enthält auch noch jene Bestandteile des Retentatmassestroms (15), deren Partialdruck bei der im Rekuperator herrschenden Temperatur ebenfalls oberhalb ihres jeweiligen Sättigungsdampfdrucks liegt. Solche Bestandteile können nicht reformierte Reste des Stoffes (9) aus der Gruppe Kohlenwasserstoffe/Ether/Alkohole oder Nebenprodukte der Dampfreformierung sein. Insbesondere kondensiert nicht reformiertes Methanol etwa bei ähnlichen Bedingungen wie Wasser. Als Nebenprodukte der Methanoldampfreformierung können etwa Dimethylether und Ameisensäure auftreten, die ebenfalls bei ähnlichen Temperaturen und Partialdrücken wie Wasser kondensieren.

In einer anderen Variante des erfindungsgemäßen Verfahrens wird das im Schritt 3 erzeugte Restgas (18) dem Schritt 1 oder dem Schritt 2 des erfindungsgemäßen Verfahrens zugeführt. Dieses Restgas (18) kann aus jenen Resten des Stoffes (9) aus der Gruppe Kohlenwasserstoffe/Ether/Alkohole, die im Dampfreaktor nicht umgesetzt wurden und auf Grund ihres Kondensationsverhaltens nicht schon wie beschrieben in Schritt 3 mitauskondensiert wurden, bestehen, ebenso aus Nebenprodukten der Dampfreformierung (z.B. Kohlenmonoxid) sowie aus Wasserstoffgas, das im Membranreaktor (3) nicht abgeschieden wurde.

In einer weiteren Variante des erfindungsgemäßen Verfahrens wird das erfindungsgemäße Verfahren mit so geringem Druck durchgeführt, dass die Auskondensation von flüssigem Kohlendioxid (19) im Verfahrensschritt 3 und die Speicherung dieses flüssigen Kohlendioxids (19) im Verfahrensschritt 4 unterhalb der Umgebungstemperatur erfolgen muss. Die dafür notwendige Kälte (17) wird in dieser Variante des erfindungsgemäßen Verfahrens mittels eines Sorptionskälteverfahren z.B. in einer Absorptionskältemaschine (8) unter Verwendung von in Verfahrensschritt 5 erzeugter Wärme (11) erzeugt. Diese Kälte (17) wird dann über mindestens eine Leitung mittels eines Kälteträgermediums (z.B. Ammoniak) in den für Schritt 3 vorgesehenen Rekuperator und in den für Schritt 4 vorgesehenen Speichertank (7) für Kohlendioxid transportiert. Liegt die Kondensations- und Speichertemperatur des Kohlendioxids unterhalb der Erstarrungstemperatur von Wasser, so stellt die vorher beschriebenen Variante des erfindungsgemäßen Verfahrens, in der vor der Auskondensation von Kohlendioxid eine Auskondensation von Wasser vorgenommen wird, eine Möglichkeit dar, eine effiziente Trocknung des Retentatmassenstroms (15) vorzunehmen und damit die Bildung von Wassereis im Schritt 3 in der gegenständlichen Variante des erfindungsgemäßen Verfahrens zu vermeiden.

Eine energiebilanzielle Analyse zeigt auch auf, dass die Menge an in Schritt 5 freigesetzter Wärme (11) nicht nur wie oben gezeigt für die Wärmeversorgung des Dampferzeugers (2) im Schritt 1 ausreicht, sondern auch für die Erzeugung von genügend Kälte, um die Auskondensation von Kohlendioxid auch bei Temperaturen von - 50° C vorzunehmen. Der Energiebedarf zum Betrieb einer Absorptionskältemaschine zur Auskondensation von Kohlendioxid aus einem 30° C warmen, zu über 90% aus Kohlendioxid bestehenden Retentatmassestrom (15) durch Abkühlung auf -50° C beträgt bei einem Druck von 6 bar ca. 15 kJ pro Mol Kohlendioxid und damit auch ca. 15kJ pro 3 Mol Wasserstoff, der in Schritt 2 freigesetzt wird. Der Vergleich mit der oben dargestellten Wärmemenge bei Oxidation von 3 Mol Wasserstoff im Verfahrensschritt 5 zeigt, dass auch der Energiebedarf zur Erzeugung dieser Kälte leicht aus der Wärme dieses Verfahrensschrittes 5 gewonnen werden kann. Ebenso reicht das Temperaturniveau der im Schritt 5 abgreifbaren Wärme bei Verwendung von Verbrennungskraftmaschinen als auch bei Verwendung von gewissen Brennstoffzellen (insbesondere Festoxidbrennstoffzellen) dazu aus, in einer zweistufigen Ammoniak-Absorptionskältemaschine Kälte auf einem Temperaturniveau von unter - 50° zu erzeugen. Die Verwendung eines mehrstufigen Absorptionskälteverfahrens ist vorteilhaft, da dadurch die bei einer Verbrennungskraftmaschine auf verschiedenen Temperaturniveaus anfallende Abwärme (Abgas ca. 200° - 450°, Kühlwasser ca.75° - 95°) effizienter zur Erzeugung von Kälte (17) genutzt werden kann.

In einer vorteilhaften Variante des erfindungsgemäßen Verfahrens wird der Stoff (9) aus der Gruppe Kohlenwasserstoffe/Ether/Alkohole oder/und Wasser als Kälteträgermittel zur genannten Auskondensation von Kohlendioxid oder/und zur genannten Auskondensation von Wasser verwendet, und so für die Verwendung in Schritt 1 des Verfahrens vorerhitzt oder verdampft.

Um vor Schritt 3 einen möglichst trockenen, wasserfreien Retentatmassestrom (15) zu erhalten, wird in einer Variante des erfindungsgemäßen Verfahrens zwischen Schritt 2 und Schritt 3 eine weitere Auskondensation von Wasser durchgeführt, allerdings im Unterschied zu der oben genannten Auskondensation von Wasser unterhalb der Umgebungstemperatur und unter Zuführung von Kälte (17), die wiederum mittels eines Sorptionsverfahrens aus der in Schritt 5 auftretenden Wärme (11) erzeugt wird. Auch dieser Verfahrensschritt kann in einem Rekuperator durchgeführt werden.

Zusammenfassend weist das erfindungsgemäße Verfahren folgende grundlegende Eigenschaften auf: Erstens wird im Schritt 5 des erfindungsgemäßen Verfahrens mechanische und/oder elektrische Energie erzeugt. Zweitens wird im Schritt 3 und Schritt 4 des erfindungsgemäßen Verfahrens Kohlendioxid in flüssiger Form abgeschieden und mit hoher Dichte gespeichert und kann bei Anwendung des Verfahrens innerhalb eines kohlenstoffbasierten Energiespeichersystems zur weiteren Synthese von kohlenstoffhaltigen Verbindungen verwendet werden. Drittens wird durch die Verwendung von Membranen mit hoher Wasserstoffpermeationsselektivität oder durch den Aufbau eines Kohlendioxid-geschlossenen Permeatmassestromkreislaufs eine nahezu vollständige Rückgewinnung von Kohlenstoff aus kohlenstoffhaltigen Verbindung (Kohlenwasserstoff, Alkohol, Ether) in Form von Kohlendioxid erreicht. Damit löst das erfindungsgemäße Verfahren die oben genannte Aufgabenstellung, innerhalb eines Energiespeichersystems mit Kohlenstoffkreislauf aus einer energiereichen, kohlenstoffhaltigen Verbindung (Kohlenwasserstoff, Alkohol, Ether) den darin enthaltenen Kohlenstoff in Form von Kohlendioxid nahezu vollständig abzuscheiden und mit hoher Dichte zu speichern ohne dabei eine Kompression von Gasen, insbesondere von Kohlendioxid oder von kohlendioxidhaltigen Gasen, durchzuführen.

### Kurze Beschreibung der Zeichnung:

In den Fig. 1 bis 3 sind drei Ausführungsvarianten des Anlagenschemas der Erfindung schematisch abgebildet:
Fig. 1 zeigt das Anlagenschema gemäß Anspruch 2 mit einer Festoxidbrennstoffzelle als Vorrichtung (4) zur Oxidation von Wasserstoffgas und mit zwei Leitungen zwischen dieser Festoxidbrennstoffzelle und dem Membranreaktor (3): einer ersten Leitung zur Zuführung des aus dem Membranreaktor (3) austretenden wasserstoffhaltigen Permeatmassestroms (13) in den Anodenraum der Festoxidbrennstoffzelle und einer zweiten Leitung zur Zuführung des oxidierten Permeatmassestroms (14) aus dem Anodenraum der Festoxidbrennstoffzelle in den Membranreaktor (3).

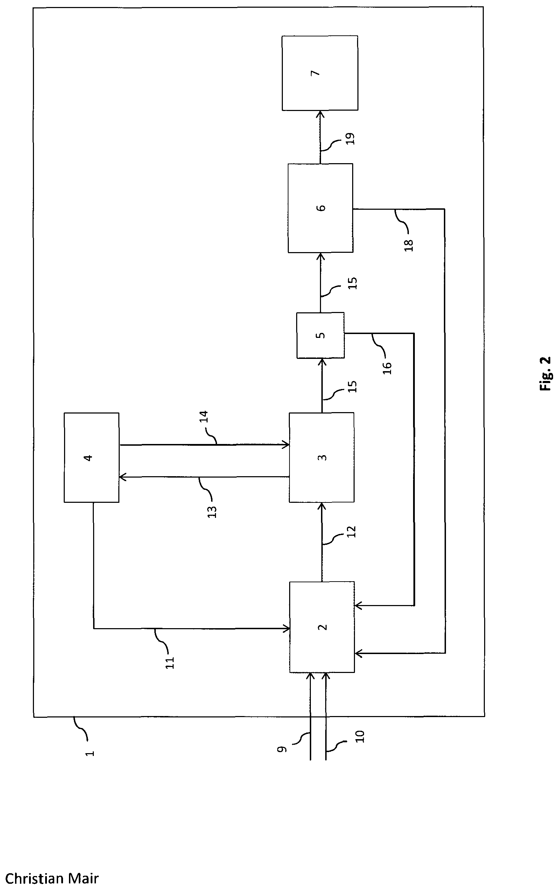

Fig. 2 zeigt eine Ausführungsvariante wie Fig. 1, aber mit einer Vorrichtung (5) zur Auskondensation von Wasser und mit einer Leitung zur Rückführung von Wasser (16) sowie einer Leitung zur Rückführung des Restgases (18) in den Dampferzeuger (2).

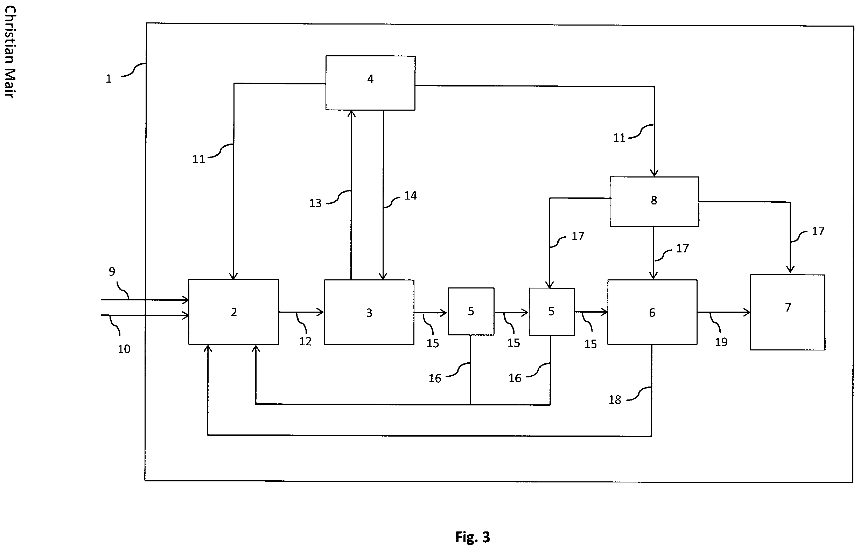

Fig. 3 zeigt eine Ausführungsvariante wie Fig. 2, aber mit zwei Vorrichtungen (5) zur Auskondensation von Wasser und einer Absorptionskältemaschine zur Erzeugung von Kälte (17) aus Wärme (11) der Vorrichtung (4) zur Oxidation von Wasserstoffgas. Die in der Absorptionskältemaschine erzeugte Kälte (17) wird einer Vorrichtung (5) zur Auskondensation von Wasser, der Vorrichtung (6) zur Auskondensation von Kohlendioxid als auch dem Speichertank (7) für Kohlendioxid zugeführt und ermöglicht in diesen Anlagenteilen eine Durchführung der jeweiligen Verfahrensschritte unterhalb der Umgebungstemperatur.

### Bezugszeichenliste:

- 1: Anlage zur gaskompressionsfreien Rückgewinnung und Speicherung von Kohlenstoff
- 2: Dampferzeuger zur Verdampfung von Wasser und eines Stoffes der Gruppe Kohlenwasserstoffe/Ether/Alkohole
- 3: Membranreaktor zur katalytischen Dampfreformierung eines Stoffes der Gruppe Kohlenwasserstoffe/Ether/Alkohole und zur Abscheidung von Wasserstoffgas aus dem durch die Dampfreformierung erzeugten Produktgas
- 4: Vorrichtung zur Oxidation von Wasserstoffgas
- 5: Vorrichtung zur Auskondensation von Wasser aus einer Wasserdampf enthaltenden Gasmischung
- 6: Vorrichtung zur Auskondensation von Kohlendioxid aus einer Kohlendioxid enthaltenden Gasmischung
- 7: Speichertank für Kohlendioxid
- 8: Absorptionskältemaschine
- 9: Stoff aus der Gruppe Kohlenwasserstoffe/Ether/Alkohole
- 10: Wasser
- 11: Wärme
- 12: überhitztes Gas
- 13: wasserstoffhaltiger Permeatmassestrom
- 14: oxidierter Permeatmassestrom
- 15: Retentatmassestrom
- 16: Wasser
- 17: Kälte
- 18: Restgas
- 19: flüssiges Kohlendioxid

## Patentansprüche

1. Anlage (1) zur Rückgewinnung und Speicherung von Kohlenstoff in Form von flüssigem Kohlendioxid (19) aus Stoffen (9) der Gruppe Kohlenwasserstoffe/Ether/Alkohole, aufweisend
- mindestens einen Dampferzeuger (2) zur Verdampfung von Wasser und eines Stoffes der Gruppe Kohlenwasserstoffe/Ether/Alkohole,
- mindestens einen Membranreaktor (3) zur katalytischen Dampfreformierung eines Stoffes der Gruppe Kohlenwasserstoffe/Ether/Alkohole und zur Abscheidung von Wasserstoffgas aus dem durch die Dampfreformierung erzeugten Produktgas,
- mindestens eine Vorrichtung (6) zur Auskondensation von Kohlendioxid aus einer Kohlendioxid enthaltenden Gasmischung,
- mindestens einen Speichertank (7) für Kohlendioxid,
- mindestens eine Vorrichtung (4) zur Oxidation von Wasserstoffgas, ausgewählt aus der Gruppe der Verbrennungskraftmaschinen oder aus der Gruppe der Brennstoffzellensysteme,
**dadurch gekennzeichnet, dass**
- der Dampferzeuger (2) dazu ausgelegt ist, Dampf von über 5,18 bar zu erzeugen, und der Membranreaktor (3), die Vorrichtung (6) zur Auskondensation von Kohlendioxid und der Speichertank (7) für Kohlendioxid mit Gasdrücken von über 5, 18 bar betreibbar sind,
- der Dampferzeuger (2) zur Verdampfung von Wasser und eines Stoffes der Gruppe Kohlenwasserstoffe/Ether/Alkohole eine Einlassvorrichtung zur Zufuhr von Wärme (11) aufweist und mindestens einen Rekuperator enthält,
- die Vorrichtung (4) zur Oxidation von Wasserstoffgas mit einer Temperatur betreibbar ist, die über der Betriebstemperatur des Dampferzeugers (2) liegt,
- die Vorrichtung (6) zur Auskondensation von Kohlendioxid einen Rekuperator aufweist,
und dass zwischen den genannten Vorrichtungen folgende Leitungen bestehen:
- mindestens eine Leitung zum Transport von Gas mit über 5,18 bar Druck, die den Dampferzeuger (2), den Membranreaktor (3), und die Vorrichtung (6) zur Auskondensation von Kohlendioxid miteinander verbindet,
- mindestens eine Leitung zum Transport eines flüssigen Mediums mit über 5,18 bar Druck, die die Vorrichtung (6) zur Auskondensation von Kohlendioxid und den Speichertank (7) für Kohlendioxid verbindet,
- mindestens eine Leitung, die den Membranreaktor (3) und die Vorrichtung (4) zur Oxidation von Wasserstoffgas verbindet und die für die Zuführung eines wasserstoffhaltigen Gases in die Vorrichtung (4) zur Oxidation von Wasserstoffgas nutzbar ist.

2. Anlage (1) nach Anspruch 1, **dadurch gekennzeichnet, dass** die Vorrichtung (4) zur Oxidation von Wasserstoffgas in mindestens einer Festoxidbrennstoffzelle besteht und durch mindestens eine weitere Leitung mit dem Membranreaktor (3) verbunden ist, die dazu ausgelegt ist, Abgas aus dem Anodenraum der Brennstoffzelle dem Membranreaktor (3) zuzuführen.

3. Anlage (1) nach einem der Ansprüche 1 bis 2, **dadurch gekennzeichnet, dass** die Anlage (1) mindestens eine Vorrichtung (5) zur Auskondensation von Wasser und eine Leitung zum Transport von Wasser enthält, die die Vorrichtung (5) zur Auskondensation von Wasser und den Dampferzeuger (2) zur Verdampfung von Wasser und eines Stoffes der Gruppe Kohlenwasserstoffe/Ether/Alkohole verbindet.

4. Anlage (1) nach einem der Ansprüche 1 bis 3, **dadurch gekennzeichnet, dass** die Anlage (1) mindestens eine Leitung zum Gastransport enthält, die die Vorrichtung (6) zur Auskondensation von Kohlendioxid aus einer Kohlendioxid enthaltenden Gasmischung mit dem Dampferzeuger (2) zur Verdampfung von Wasser und eines Stoffes der Gruppe Kohlenwasserstoffe/Ether/Alkohole oder mit dem Membranreaktor (3) zur katalytischen Dampfreformierung eines Stoffes der Gruppe Kohlenwasserstoffe/Ether/Alkohole und zur Abscheidung von Wasserstoffgas aus dem durch die Dampfreformierung erzeugten Produktgas verbindet.

5. Anlage (1) nach einem der Ansprüche 1 bis 4, **dadurch gekennzeichnet, dass** die Anlage (1) mindestens eine Absorptionskältemaschine (8) enthält, dass der Speichertank (7) für Kohlendioxid eine Vorrichtung zur Kühlung des Tankinhaltes auf einem Temperaturniveau unterhalb der Umgebungstemperatur enthält, dass die Anlage (1) mindestens eine Leitung zum Transport eines Kälteträgermediums unterhalb der Umgebungstemperatur enthält, die die Absorptionskältemaschine (8) und die Vorrichtung (6) zur Auskondensation von Kohlendioxid verbindet und dass die Anlage (1) mindestens eine Leitung zum Transport eines Kälteträgermediums unterhalb der Umgebungstemperatur enthält, die die Absorptionskältemaschine (8) und den Speichertank (7) für Kohlendioxid verbindet.

6. Anlage (1) nach Anspruch 5, **dadurch gekennzeichnet, dass** die Anlage mindestens zwei Vorrichtungen (5) zur Auskondensation von Wasser aus einer Wasserdampf enthaltenden Gasmischung enthält und zwischen einer dieser Vorrichtungen und der Absorptionskältemaschine (8) eine Leitung zum Transport eines Kälteträgermediums unterhalb der Umgebungstemperatur besteht.

7. Verfahren zur Rückgewinnung und Speicherung von Kohlenstoff in Form von flüssigem Kohlendioxid (19) aus Stoffen (9) der Gruppe Kohlenwasserstoffe/Ether/Alkohole, **gekennzeichnet durch** die folgenden Schritte:
- Schritt 1: Erzeugung eines überhitzten Gases (12) mit mehr als 5,18 bar Druck durch Verdampfen und Erhitzen von Wasser (10) und von einem Stoff (9) der Gruppe Kohlenwasserstoffe/Ether/Alkohole in einem Dampferzeuger (2), dem Wärme (11) zugeführt wird;
- Schritt 2: Katalytische Dampfreformierung des in Schritt 1 erzeugten, überhitzten Gases (12) mit mehr als 5,18 bar Druck und Erzeugung eines Retentatmassestroms (15) durch Abscheidung von Wasserstoffgas aus dem durch die Dampfreformierung erzeugten Produktgas mit Hilfe eines in einem Membranreaktor (3) durchgeführten Membranverfahrens;
- Schritt 3: Erzeugung eines Restgases (18) durch Auskondensation von flüssigem Kohlendioxid (19) aus dem in Schritt 2 erzeugten Retentatmassestrom (15);
- Schritt 4: Speicherung des in Schritt 3 auskondensierten, flüssigen Kohlendioxids (19) in einem Speichertank (7) für Kohlendioxid;
- Schritt 5: Freisetzung von Wärme (11) durch Oxidation des in Schritt 2 erzeugten und abgeschiedenen Wasserstoffgases, wobei die Temperatur bei der Oxidation des in Schritt 2 erzeugten und abgeschiedenen Wasserstoffgases höher ist als die Temperatur der katalytischen Dampfreformierung in Schritt 2, sowie von elektrischer und/oder mechanischer Energie.

8. Verfahren nach Anspruch 7, **dadurch gekennzeichnet, dass** die in Schritt 5 erzeugte Abwärme dem im Dampferzeuger (2) enthaltenen Rekuperator zugeführt wird.

9. Verfahren nach Anspruch 7 oder 8, **dadurch gekennzeichnet, dass** der im Verfahrensschritt 2 durch Wasserstoffabscheidung mittels Membran erzeugte, wasserstoffgashaltige Permeatmassestrom (13) zur Oxidation des darin enthaltenen Wasserstoffgases einer Festoxidbrennstoffzelle zugeführt wird und der dadurch entstehende oxidierte Permeatmassestrom (14) wieder an die Permeatseite des im Schritt 2 verwendeten Membranreaktors (3) zurückgeführt wird.

10. Verfahren nach einem der Ansprüche 7 bis 9, **dadurch gekennzeichnet, dass** zwischen Verfahrensschritt 2 und Verfahrensschritt 3 Wasser (16) aus dem in Schritt 2 erzeugten Retentatmassestrom (15) oberhalb der Umgebungstemperatur auskondensiert und dieses dem Verfahrensschritt 1 zugeführt wird.

11. Verfahren nach einem der Ansprüche 7 bis 10, **dadurch gekennzeichnet, dass** das in Schritt 3 erzeugte Restgas (18) dem Verfahrensschritt 1 oder dem Verfahrensschritt 2 zugeführt wird.

12. Verfahren nach einem der Ansprüche 7 bis 11, **dadurch gekennzeichnet, dass** die Auskondensation von flüssigem Kohlendioxid (19) im Verfahrensschritt 3 und die Speicherung dieses flüssigen Kohlendioxids (19) im Verfahrensschritt 4 unterhalb der Umgebungstemperatur durchgeführt wird, indem durch ein Sorptionskälteverfahren unter Verwendung von in Verfahrensschritt 5 erzeugter Wärme (11) Kälte (17) erzeugt wird und diese der in Verfahrensschritt 3 durchgeführten Auskondensation von flüssigem Kohlendioxid (19) wie auch der in Verfahrensschritt 4 durchgeführten Speicherung dieses flüssigen Kohlendioxids (19) mittels eines Kälteträgermediums zugeführt wird.

13. Verfahren nach Anspruch 12, **dadurch gekennzeichnet, dass** zwischen Verfahrensschritt 2 und Verfahrensschritt 3 eine weitere, der in Anspruch 10 genannten Auskondensation nachfolgende Auskondensation von Wasser (16) aus dem in Schritt 2 erzeugten Retentatmassestrom (15) unterhalb der Umgebungstemperatur durchgeführt wird, indem durch ein Sorptionskälteverfahren unter Verwendung von in Verfahrensschritt 5 erzeugter Wärme (11) Kälte (17) erzeugt wird und diese der genannten Auskondensation von Wasser (16) unterhalb der Umgebungstemperatur mittels eines Kälteträgermediums zugeführt wird.

## Claims

1. Apparatus (1) for the recovery and storage of carbon in the form of liquid carbon dioxide (19) from substances (9) of the group hydrocarbons/ethers/alcohols, comprising
- at least one steam generator (2) for the evaporation of water and of a substance of the group hydrocarbons/ethers/alcohols,
- at least one membrane reactor (3) for catalytic steam reforming of a substance of the group hydrocarbons/ethers/alcohols and for separating hydrogen gas from the product gas generated by the steam reforming,
- at least one device (6) for condensing out carbon dioxide from a gas mixture containing carbon dioxide,
- at least one storage tank (7) for carbon dioxide,
- at least one device (4) for the oxidation of hydrogen gas, selected from the group of internal combustion engines or from the group of fuel cell systems,
**characterised in that**
- the steam generator (2) is designed to generate steam of more than 5.18 bar, and the membrane reactor (3), the device (6) for condensing out carbon dioxide and the storage tank (7) for carbon dioxide can be operated with gas pressures of more than 5.18 bar,
- the steam generator (2) for vaporizing water and a substance of the group hydrocarbons/ethers/alcohols has an inlet device for supplying heat (11) and contains at least one recuperator,
- the device (4) for oxidation of hydrogen gas can be operated at a temperature which is above the operating temperature of the steam generator (2),
- the device (6) for condensing out carbon dioxide has a recuperator,
and that there are the following lines between the said devices:
- at least one line for transporting gas at a pressure above 5.18 bar, connecting the steam generator (2), the membrane reactor (3) with the device (6) for condensing out carbon dioxide,
- at least one line for transporting a liquid medium with a pressure of more than 5.18 bar, connecting the device (6) for condensing out carbon dioxide with the storage tank (7) for carbon dioxide,
- at least one line which connects the membrane reactor (3) with the device (4) for the oxidation of hydrogen gas and which can be used for feeding a hydrogen-containing gas into the device (4) for the oxidation of hydrogen gas.

2. Apparatus (1) according to claim 1, **characterized in that** the device (4) for the oxidation of hydrogen gas consists of at least one solid oxide fuel cell and is connected to the membrane reactor (3) by at least one further line which is designed to feed exhaust gas from the anode space of the fuel cell to the membrane reactor (3).

3. Apparatus (1) according to any one of claims 1 to 2, **characterized in that** the apparatus (1) comprises at least one device (5) for condensing out water and a line for transporting water, connecting the device (5) for condensing out water with the steam generator (2) for the evaporation of water and of a substance of the group hydrocarbons/ethers/alcohols.

4. Apparatus (1) according to any one of claims 1 to 3, **characterized in that** the apparatus (1) comprising at least one gas transport line connecting the device (6) for condensing out carbon dioxide from a gas mixture containing carbon dioxide to the steam generator (2) for evaporating water and a substance of the hydrocarbons/ethers/alcohols group or to the membrane reactor (3) for catalytic steam reforming of a substance of the hydrocarbons/ethers/alcohols group and for separating hydrogen gas from the product gas generated by the steam reforming.

5. Apparatus (1) according to any one of claims 1 to 4, **characterized in that** the apparatus (1) contains at least one absorption refrigeration machine (8), that the storage tank (7) for carbon dioxide contains a device for cooling the tank contents to a temperature level below the ambient temperature, that the apparatus (1) contains at least one line for transporting a refrigerant medium below the ambient temperature, which connects the absorption chiller (8) with the device (6) for condensing out carbon dioxide and that the apparatus (1) contains at least one line for transporting a refrigerant medium below ambient temperature, which connects the absorption refrigerating machine (8) with the storage tank (7) for carbon dioxide.

6. Apparatus (1) according to claim 5, **characterised in that** the apparatus comprises at least two devices (5) for condensing out water from a gas mixture containing water vapour, and **in that** a line for transporting a cold carrier medium below ambient temperature exists between one of these devices and the absorption refrigerating machine (8).

7. a process for the recovery and storage of carbon in the form of liquid carbon dioxide (19) from substances (9) of the hydrocarbons/ethers/alcohols group, **characterised by** the following steps:
- step 1: Generation of a superheated gas (12) with more than 5.18 bar pressure by vaporizing and heating water (10) and a substance (9) of the group hydrocarbons/ethers/alcohols in a steam generator (2) to which heat (11) is supplied;
- step 2: catalytic steam reforming of the superheated gas (12) generated in step 1 with more than 5.18 bar pressure and generation of a retentate mass flow (15) by separating hydrogen gas from the product gas generated by the steam reforming by means of a membrane process carried out in a membrane reactor (3);
- step 3: generation of a residual gas (18) by condensing out liquid carbon dioxide (19) from the retentate mass flow (15) generated in step 2;
- step 4: storing the liquid carbon dioxide (19) condensed out in step 3 in a storage tank (7) for carbon dioxide;
- step 5: releasing heat (11) by oxidation of the hydrogen gas generated and separated in step 2, the temperature in the oxidation of the hydrogen gas generated and separated in step 2 being higher than the temperature of the catalytic steam reforming in step 2, and releasing electrical and/or mechanical energy.

8. Process according to claim 7, **characterized in that** the waste heat generated in step 5 is fed to the recuperator contained in the steam generator (2).

9. Process according to claim 7 or 8, **characterized in that** the hydrogen gas-containing permeate mass flow (13) generated by hydrogen separation by means of a membrane in process step 2 is fed to a solid oxide fuel cell for oxidation of the hydrogen gas contained therein and **in that** the oxidized permeate mass flow (14) resulting thereout is returned to the permeate side of the membrane reactor (3) used in step 2.

10. Process according to one of claims 7 to 9, **characterized in that** between process step 2 and process step 3 water (16) is condensed out of the retentate mass flow (15) generated in step 2 above ambient temperature and that this is fed to process step 1.

11. Process according to one of claims 7 to 10, **characterized in that** the residual gas (18) generated in step 3 is fed to process step 1 or process step 2.

12. Process according to one of claims 7 to 11, **characterized in that** condensation out of liquid carbon dioxide (19) is carried out in process step 3 and the storage of this liquid carbon dioxide (19) is carried out in process step 4 below ambient temperature, by generating cold (17) by a sorption refrigeration process using heat (11) generated in process step 5 and this cold, by means of a cold carrier medium, being supplied to the condensation out of liquid carbon dioxide (19) carried out in process step 3 and to storage of this liquid carbon dioxide (19) carried out in process step 4.

13. Process according to claim 12, **characterised in that** between process step 2 and process step 3 a further condensation out of water (16), following the condensation out mentioned in claim 10, is carried out from the retentate mass flow (15) generated in step 2 below the ambient temperature, by generating cold (17) by a sorption refrigeration process using heat (11) generated in process step 5 and this cold being supplied to the said condensation out of water (16) below the ambient temperature by means of a cold carrier medium.

## Revendications

1. Installation (1) de récupération et de stockage de carbone sous forme de dioxyde de carbone liquide (19) à partir de substances (9) du groupe hydrocarbures/éthers/alcools comprenant
- au moins un générateur de vapeur (2) pour provoquer l'évaporation de l'eau et d'une substance du groupe hydrocarbures/éthers/alcools,
- au moins un réacteur à membrane (3) pour le vaporéformage catalytique d'une substance du groupe hydrocarbures/éthers/alcools et pour la séparation de l'hydrogène gazeux du produit gazeux généré par le vaporéformage,
- au moins un dispositif (6) pour la condensation du dioxyde de carbone à partir d'un mélange gazeux contenant du dioxyde de carbone,
- au moins un réservoir (7) prévu pour le stockage de dioxyde de carbone,
- au moins un dispositif (4) pour l'oxydation de l'hydrogène gazeux choisi dans le groupe des moteurs à combustion interne ou dans le groupe des systèmes de piles à combustible,
**caractérisée en ce que**
- le générateur de vapeur (2) est conçu pour générer de la vapeur avec une pression supérieure à 5,18 bars, et le réacteur à membrane (3), le dispositif (6) pour la condensation du dioxyde de carbone et le réservoir (7) prévu pour le stockage de dioxyde de carbone peuvent fonctionner avec des pressions de gaz supérieures à 5,18 bars,
- le générateur de vapeur (2) pour provoquer l'évaporation de l'eau et d'une substance du groupe hydrocarbures/éthers/alcools possède un dispositif d'apport de chaleur (11) et contient au moins un récupérateur,
- le dispositif (4) d'oxydation de l'hydrogène gazeux peut fonctionner à une température supérieure à la température de fonctionnement du générateur de vapeur (2),
- le dispositif (6) pour la condensation du dioxyde de carbone comprend un récupérateur,
et **en ce que** les dispositifs mentionnés sont reliés entre eux par
- au moins une conduite pour le transport de gaz à une pression supérieure à 5,18 bars qui relie le générateur de vapeur (2), le réacteur à membrane (3) et le dispositif (6) pour la condensation du dioxyde de carbone,
- au moins une conduite pour le transport d'un liquide à une pression supérieure à 5,18 bars qui relie le dispositif (6) pour la condensation du dioxyde de carbone et le réservoir (7) prévu pour le stockage de dioxyde de carbone,
- au moins une conduite qui relie le réacteur à membrane (3) et le dispositif (4) pour l'oxydation de l'hydrogène gazeux et qui peut être utilisée pour alimenter le dispositif (4) pour l'oxydation de l'hydrogène gazeux avec un gaz contenant de l'hydrogène.

2. Installation (1) selon la revendication 1, **caractérisée en ce que** le dispositif (4) pour l'oxydation de l'hydrogène gazeux consiste en au moins une pile à combustible à oxyde solide et est relié par au moins une autre conduite avec le réacteur à membrane (3) qui est conçue pour alimenter le réacteur à membrane (3) avec du gaz provenant du compartiment d'anode de la pile à combustible.

3. Installation (1) selon l'une des revendications 1 à 2, **caractérisée en ce que** l'installation (1) contient au moins un dispositif (5) pour la condensation de l'eau et une conduite pour le transport de l'eau qui relie le dispositif (5) pour la condensation de l'eau avec le générateur de vapeur (2) pour provoquer l'évaporation de l'eau et d'une substance du groupe hydrocarbures/éthers/alcools.

4. Installation (1) selon l'une des revendications 1 à 3, **caractérisée en ce que** l'installation (1) contient au moins une conduite pour le transport de gaz qui relie le dispositif (6) pour la condensation du dioxyde de carbone à partir d'un mélange gazeux contenant du dioxyde de carbone avec le générateur de vapeur (2) pour provoquer l'évaporation de l'eau et d'une substance du groupe hydrocarbures/éthers/alcools ou avec le réacteur à membrane (3) pour le vaporéformage catalytique d'une substance du groupe hydrocarbures/éthers/alcools et pour la séparation de l'hydrogène gazeux du produit gazeux généré par le vaporéformage.

5. Installation (1) selon l'une des revendications 1 à 4, **caractérisée en ce que** l'installation (1) contient au moins un réfrigérateur à absorption (8), **en ce que** le réservoir (7) prévu pour le stockage de dioxyde de carbone contient un dispositif pour refroidir le contenu du réservoir à un niveau de température inférieur à la température ambiante, **en ce que** l'installation (1) contient au moins une conduite pour le transport d'un fluide de refroidissement en dessous de la température ambiante qui relie le réfrigérateur à absorption (8) avec le dispositif (6) pour la condensation du dioxyde de carbone et **en ce que** l'installation (1) contient au moins une conduite pour le transport d'un fluide de refroidissement en dessous de la température ambiante qui relie le réfrigérateur à absorption (8) avec le réservoir (7) prévu pour le stockage de dioxyde de carbone.

6. Installation (1) selon la revendication 5, **caractérisée en ce que** le système contient au moins deux dispositifs (5) pour la condensation de l'eau à partir d'un mélange gazeux contenant de la vapeur d'eau et **en ce qu'**il y a une conduite pour le transport d'un fluide de refroidissement en dessous de la température ambiante entre l'un de ces dispositifs et le réfrigérateur à absorption (8).

7. Procédé de récupération et de stockage de carbone sous forme de dioxyde de carbone liquide (19) à partir de substances (9) du groupe hydrocarbures/éthers/alcools, **caractérisé par** les étapes suivantes :
- étape 1 : génération d'un gaz surchauffé (12) avec une pression supérieure à 5,18 bars par évaporation et chauffage d'eau (10) et d'une substance (9) du groupe hydrocarbures/éthers/alcools dans un générateur de vapeur (2) qui est alimenté en chaleur (11) ;
- étape 2 : vaporéformage catalytique du gaz surchauffé (12) généré à l'étape 1 avec une pression supérieure à 5,18 bars et génération d'un débit massique de rétentat (15) en séparant l'hydrogène gazeux du produit gazeux généré par le vaporéformage à l'aide d'un procédé membranaire effectué dans un réacteur à membrane (3) ;
- étape 3 : génération d'un gaz résiduel (18) par condensation du dioxyde de carbone liquide (19) à partir du débit massique de rétentat (15) généré à l'étape 2 ;
- étape 4 : stockage du dioxyde de carbone liquide condensé (19) à l'étape 3 dans un réservoir (7) prévu pour le stockage de dioxyde de carbone ;
- étape 5 : dégagement de chaleur (11) par l'oxydation de l'hydrogène gazeux généré et séparé à l'étape 2 à condition que la température d'oxydation de l'hydrogène gazeux généré et séparé à l'étape 2 est supérieure à la température du vaporéformage catalytique à l'étape 2, et dégagement d'énergie électrique et/ou mécanique.

8. Procédé selon la revendication 7, **caractérisé en ce que** le récupérateur contenu dans le générateur de vapeur (2) est alimenté par la chaleur émise générée à l'étape 5.

9. Procédé selon l'une des revendications 7 à 8, **caractérisé en ce qu'**une pile à combustible à oxyde solide est alimentée par le débit massique de perméat contenant de l'hydrogène gazeux (13) et généré par séparation d'hydrogène au moyen d'une membrane à l'étape 2 afin que l'hydrogène gazeux contenu dans ce débit massique de perméat (13) soit oxydé, et **en ce que** le débit massique de perméat oxydé (14) qui en résulte est recyclé vers le côté perméat du réacteur à membrane (3) utilisé à l'étape 2.

10. Procédé selon l'une des revendications 7 à 9, **caractérisé en ce qu'**entre l'étape 2 et l'étape 3 du procédé, l'eau (16) est condensée au-dessus de la température ambiante à partir du débit massique de rétentat (15) généré à l'étape 2 et est retournée à l'étape 1 du procédé.

11. Procédé selon l'une des revendications 7 à 10, **caractérisé en ce que** l'étape 1 ou l'étape 2 du procédé est alimentée par le gaz résiduel (18) généré à l'étape 3.

12. Procédé selon l'une des revendications 7 à 11, **caractérisé en ce que** la condensation du dioxyde de carbone liquide (19) à l'étape 3 du procédé et le stockage de ce dioxyde de carbone liquide (19) à l'étape 4 du procédé sont effectués en dessous de la température ambiante en utilisant un procédé de réfrigération par sorption générant du froid (17) en utilisant de la chaleur (11) générée à l'étape 5 du procédé et **en ce que** la condensation du dioxyde de carbone liquide (19) effectuée à l'étape 3 du procédé ainsi que le stockage de ce dioxyde de carbone liquide (19) effectué à l'étape 4 du procédé sont alimentés par ledit froid (17) au moyen d'un fluide de refroidissement.

13. Procédé selon la revendication 12, **caractérisé en ce qu'**entre l'étape de 2 et l'étape 3 du procédé, une autre condensation de l'eau (16) à partir du débit massique de rétentat (15) généré à l'étape 2, suivante à la condensation mentionnée dans la revendication 9, est effectuée en dessous de la température ambiante par la génération de froid (17) en appliquant un procédé de réfrigération par sorption et en utilisant la chaleur (11) générée à l'étape 5 du procédé, et par l'alimentation de la condensation susmentionnée de l'eau (16) en dessous de la température ambiante par ledit froid (17) au moyen d'un fluide de refroidissement.
